# EUROPEAN PATENT APPLICATION

(11) **EP 4 697 387 A1**
(43) Date of publication of application: **18.02.2026**
(21) Application number: 24843505.9
(22) Date of filing: 17.07.2024
(51) Int. Cl.: H01M 4/04, B05C 11/10, B05C 5/02

(54) **ELECTRODE COATING SLURRY CIRCULATION SYSTEM CAPABLE OF CIRCULATING SLURRY WHEN LINE STOP OCCURS, AND ELECTRODE COATING SLURRY CIRCULATION METHOD USING SAME**

(30) Priority: 20.07.2023 KR 20230094694
(71) Applicant: LG Energy Solution, Ltd., Seoul 07335 (KR)
(72) Inventor: SEO, Sangjin, Daejeon 34122 (KR); JEON, Shin Wook, Daejeon 34122 (KR); HAN, Min Seong, Daejeon 34122 (KR); CHOI, Hyunwoo, Daejeon 34122 (KR); CHA, Yura, Daejeon 34122 (KR)
(74) Representative: Plasseraud IP
(86) International application number: PCT/KR2024/010275
(87) International publication number: WO 2025/018790

(57) **Abstract**

The present invention relates to a slurry circulation system for electrode coating, comprising a double layer slot coating die for applying an electrode active material slurry to a top layer of the electrode and a bottom layer of the electrode on a current collector; a first tank supplying the coating die with a first electrode active material slurry to be coated on the top layer of the electrode; a second tank supplying the coating die with a second electrode active material slurry to be coated on the bottom layer of the electrode; a first circulation pipe connecting the coating die and the first tank; and a second circulation pipe connecting the coating die and the second tank; wherein, upon a line stop, the slurry circulates through the circulation pipes connecting the coating die and the tanks, and a method for circulating a slurry for electrode coating using same.

## Description

### [Technical Field]

This application claims the benefit of priority to Korean Patent Application No. 10-2023-0094694, filed July 20, 2023, the disclosures of which are incorporated herein by reference in their entirety.

The present invention relates to a slurry circulation system for electrode coating capable of circulating a slurry in the event of line stop, and a method for circulating a slurry for electrode coating using same. Specifically, the present invention relates to a slurry circulation system for electrode coating that can circulate slurry even in the event of line stop by changing the structure of a coating die, and a method for circulating a slurry for electrode coating using same.

### [Related Art]

As the range of applications for secondary batteries expands from small, portable electronics to medium and large electric vehicles (EVs), energy storage systems (ESS), electric ships, and more, the demand for lithium secondary batteries with high capacity, high energy density, and long life is growing rapidly.

The process for manufacturing a positive electrode and a negative electrode, which are indispensable for manufacturing the secondary batteries, is to coat the electrode slurry, which is generally a mixture of an active material and a conductive material, by applying the slurry on the current collector and drying it, and the electrode active material slurry supplied from the tank can be coated using a coating die device for manufacturing an electrode. **In** addition, in the event of a line stop, which interrupts the coating process, there is no separate system to circulate a slurry, so a return valve connected to the bottom of the die discharges the slurry back into the supply tank to prevent the slurry from remaining in the coating die.

However, when the residual slurry is discharged from the die by the return valve in the event of line stop, the slurry often agglomerates because the slurry does not circulate in the coating process system including the tank and coating die. **In** particular, agglomeration or gelation of the slurry within the coating die occurred, and when coating electrodes after line stop, surface defects such as pinholes and dents occurred, or line defects caused by slurry getting stuck between the C-roll and coating die occurred. This can lead to poor coating quality and disposal of non-conforming electrodes, resulting in lower electrode process yields and reduced overall equipment effectiveness (OEE).

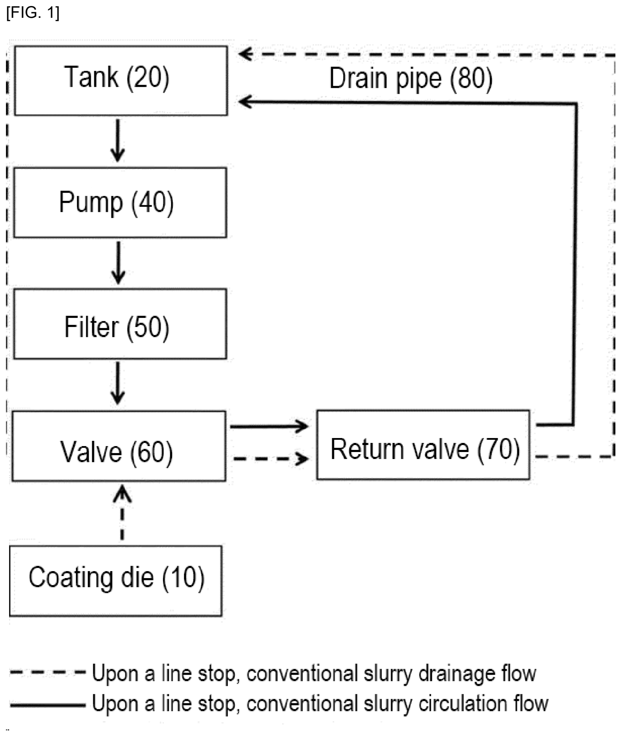

For example, in the conventional electrode coating processes for manufacturing secondary batteries, in the event of a line stop, the remaining slurry in the die is drained back to the tank (20) using a return valve as shown in FIG. 1, but there is no separate slurry circulation system directly connected from the coating die (10) to the tank (20), resulting in agglomeration or gelation of the slurry in the coating die (10). This ultimately led to poor coating quality, and electrodes that did not meet quality standards were discarded after production, resulting in costly losses.

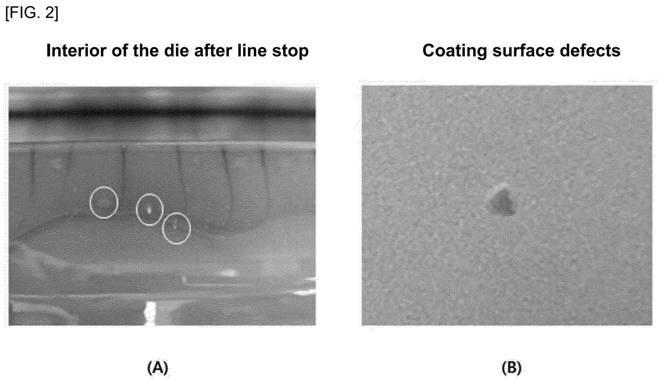

Specifically, when inspecting the inside of the coating die after stop, as shown in FIG. 2, the slurry was found to be clumped or visibly contained a large number of electrode dusts, and surface defects such as pinholes and dents, and line defects caused by slurry getting stuck between the C-roll and coating die were noted.

**In** order to solve the above problems, a slurry circulation system for electrode coating has been proposed, such as Korean Patent Application No. 10-2022-0071892, in which a circulation pipe is connected to a coating die and the structure of the coating die is changed so that slurry can be circulated through at least one of a left side, a right side, a rear side, and a bottom side of the die, so that slurry can be circulated to a tank through a circulation pipe connected to at least one of a left side, a right side, a rear side, and a bottom side of the coating die even when stop.

However, despite the above application, there is a need for a slurry circulation system for electrode coating that can be used without limitation in the coating direction of a vertical or horizontal structure, and that can be used without limitation in Double Layer Slot Die Coating (DLD) or Single Layer Slot Die Coating (SLD).

(Patent reference 1) Korean Patent Application No. 10-2022-0168566, "Slurry circulation system for electrode coating capable of circulating slurry when line stop occurs, and slurry circulation method for electrode coating using the same"

### [Detailed Description of the Invention]

### [Technical Problem]

**In** order to solve the above problems, the inventors of the present invention provide a slurry circulation system for electrode coating capable of circulating a slurry in the event of line stop, wherein in a double layer process for applying electrode active material slurry to the top and bottom surfaces of a current collector, the two electrode active material slurries are continuously circulated throughout the coating process system when line stop occurs, thereby preventing the slurry from stagnating or agglomerating in the die in advance, and improving coating quality, process yield, and productivity by minimizing surface defects and line defects that may occur in electrode coating after line stop, and a method for circulating a slurry for electrode coating using same.

### [Technical Solution]

According to a "first aspect" of the present invention,
the present invention provides a slurry circulation system for electrode coating, comprising a double layer slot coating die for applying an electrode active material slurry to a top layer of the electrode and a bottom layer of the electrode on a current collector; a first tank supplying the coating die with a first electrode active material slurry to be coated on the top layer of the electrode; and a second tank supplying the coating die with a second electrode active material slurry to be coated on the bottom layer of the electrode;
a first circulation pipe connecting the coating die and the first tank; and a second circulation pipe connecting the coating die and the second tank;
wherein, upon a line stop, the slurry circulates through the circulation pipes connecting the coating die and the tanks.

According to a "second aspect" of the present invention,
the present invention provides a method for circulating a slurry for electrode coating using the slurry circulation system.

### [Advantageous Effects]

The slurry circulation system for electrode coating according to the present invention, and the method for circulating a slurry for electrode coating using the same have the effect of continuously circulating two electrode active material slurries throughout the entire process, including the tank and the die, even in the event of a line stop where the coating process of the secondary battery is stopped. This prevents the slurries from remaining in the die, thereby avoiding agglomeration or gelation due to slurry agglomeration within the die. As a result, coating quality defects are minimized during the coating process after the line stop, improving productivity.

**In** addition, the slurry circulation system for electrode coating according to the present invention and the method for circulating a slurry for electrode coating using same have the advantage of providing a system in which two slurries can continuously circulate, so that the process temperature in the coating die remains unchanged even when line stop occurs, and the coating process can be effectively carried out without any additional steps even after line stop is performed.

**In** addition, the slurry circulation system for electrode coating according to the present invention and the method for circulating a slurry for electrode coating using same are applicable to both positive electrode and negative electrode coating processes, and have the advantage of being able to respond regardless of the size of the current collector in a coating process using a slot die.

### [Brief Description of Drawing]

FIG. 1 is a schematic diagram of the flow of slurry circulation and drainage in a conventional line stop in the electrode coating process in manufacturing a secondary battery.
FIG. 2 shows (A) a photograph of the interior of the coating die when opened after stop, and (B) a photograph of the surface defects that occurred when coating the electrodes after stop, when the slurry was only drained rather than circulated in the event of the stop, as conventionally done.
FIG. 3 is a schematic diagram of a double-layer slot coating process in the electrode coating process in manufacturing a secondary battery.
FIG. 4 illustrates one example of a coating die of the slurry circulation system for electrode coating of the present invention.
FIG. 5 illustrates another example of a coating die of the slurry circulation system for electrode coating of the present invention.
FIG. 6 is a schematic illustration of a structure in which the circulation pipe is connected to the bottom side of a coating die in one example of the slurry circulation system for electrode coating of the present invention.
FIG. 7 is a schematic illustration of a structure in which the circulation pipe is connected to the bottom side of a coating die in one example of the slurry circulation system for electrode coating of the present invention.
FIG. 8 is a schematic illustration of a structure in which the circulation pipe is connected to the bottom side of a coating die in one example of the slurry circulation system for electrode coating of the present invention.
FIG. 9 is a schematic illustration of a structure in which the circulation pipe is connected to the bottom side of a coating die in one example of the slurry circulation system for electrode coating of the present invention.
FIG. 10 is a schematic diagram of the flow of slurry circulation and drainage in the event of stop in the present invention in the electrode coating process in manufacturing a secondary battery.
FIG. 11 illustrates an example of a slurry circulation system for electrode coating of the present invention.
FIG. 12 illustrates an example of a slurry circulation system for electrode coating of the present invention.
FIG. 13 illustrates the structure of a lip guard provided in a coating die according to the present invention.
FIG. 14 illustrates the opening and closing structure of a lip guard provided in a coating die according to the present invention.
FIG. 15 is an enlarged view of the structure in which a lip guard and a discharge portion of the coating die are in contact according to the present invention.

### [Best Mode]

According to a "first aspect" of the present invention,
the present invention provides a slurry circulation system for electrode coating, comprising a double layer slot coating die for applying an electrode active material slurry to a top layer of the electrode and a bottom layer of the electrode on a current collector; a first tank supplying the coating die with a first electrode active material slurry to be coated on the top layer of the electrode; and a second tank supplying the coating die with a second electrode active material slurry to be coated on the bottom layer of the electrode;
a first circulation pipe connecting the coating die and the first tank; and a second circulation pipe connecting the coating die and the second tank;
wherein, upon a line stop, the slurry circulates through the circulation pipes connecting the coating die and the tanks.

**In** one example of the present invention, the present invention provides a slurry circulation system for electrode coating, wherein the coating die comprises two manifold portions inside the die that dispense slurry to the top layer of the electrode and the bottom layer of the electrode on a current collector.

**In** one example of the present invention, the present invention provides a slurry circulation system for electrode coating, wherein the circulation **RPM** of the second circulation pipe is different from the circulation **RPM** of the first circulation pipe.

**In** one example of the present invention, the present invention provides a slurry circulation system for electrode coating, wherein the circulation **RPM** of the second circulation pipe is one-third to two-thirds of the circulation **RPM** of the first circulation pipe.

**In** one example of the present invention, the present invention provides a slurry circulation system for electrode coating, wherein the coating die comprises a discharge portion from which a slurry for electrode coating is discharged and a lip guard for closing and opening the discharge portion, wherein the lip guard comprises a Teflon-based material.

**In** one example of the present invention, the present invention provides a slurry circulation system for electrode coating, wherein the slurry circulates through the circulation pipes connected from the rear side of the coating die to the tanks when the line stops.

**In** one example of the present invention, the present invention provides a slurry circulation system for electrode coating, wherein the slurry circulates through the circulation pipes connected from the left side and the right side of the coating die to the tanks when the line stops.

**In** one example of the present invention, the present invention provides a slurry circulation system for electrode coating, wherein the bottom side of the coating die is provided with slurry feed holes leading to manifold portions within the die,
wherein each of the manifold portions comprises: a first passage comprising a void section formed in an upward direction from the slurry feed hole; and a second passage comprising a void section formed in lateral directions from one end of the first passage.

**In** one example of the present invention, the present invention provides a slurry circulation system for electrode coating, wherein connection holes for connecting circulation pipes are positioned on at least one of the left side, right side, rear side and bottom side of the coating die,
wherein, when the line stops, the electrode active material slurry supplied through the slurry feed hole moves in the interior of the coating die in lateral directions through the slurry travel paths and circulates to the tanks through each of the circulation pipes connected to the connection holes.

**In** one example of the present invention, the present invention provides a slurry circulation system for electrode coating, which further comprises: a pump for supplying slurry from the respective tanks to the coating die; a filter; and a valve in communication with the slurry feed hole.

**In** one example of the present invention, the slurry circulation system for electrode coating further comprises: a return valve; and a drain pipe connecting the return valve and the respective tanks; wherein, upon a line stop, the return valve is opened to discharge a portion of the electrode active material slurry supplied from the respective tanks into the respective tanks via the drain pipe.

According to a "second aspect" of the present invention,
the present invention provides a method for circulating a slurry for electrode coating using the slurry circulation system according to any one of claims 1 to 11.

### [Mode for Practicing the Invention]

Although preferred examples of the present invention are presented to facilitate an understanding of the invention, the following examples are provided for the purpose of illustrating the invention and are not intended to limit the invention.

**In** addition, the sizes and shapes of the components shown in the drawings may be exaggerated for clarity and convenience of description, and terms specifically defined in view of the construction and operation of the present invention may be subject to the intent or custom of the user or operator, or the convention, and definitions of such terms are to be made on the basis of the disclosure as a whole.

Hereinafter, the present invention will be described in detail with reference to the accompanying drawings.

The inventors of the present invention invented a slurry circulation system for electrode coating, comprising a double layer slot coating die for applying an electrode active material slurry to a top layer of the electrode and a bottom layer of the electrode on a current collector; a first tank supplying the coating die with a first electrode active material slurry to be coated on the top layer of the electrode; a second tank supplying the coating die with a second electrode active material slurry to be coated on the bottom layer of the electrode; a first circulation pipe connecting the coating die and the first tank; and a second circulation pipe connecting the coating die and the second tank; wherein, upon a line stop, the slurry circulates through the circulation pipes connecting the coating die and the tanks, and a method for circulating a slurry for electrode coating using same.

The slurry circulation system for electrode coating according to one example of the present invention is a system comprising a double layer slot coating die for applying an electrode active material slurry to a top layer of the electrode and a bottom layer of the electrode on a current collector; a first tank supplying the coating die with a first electrode active material slurry to be coated on the top layer of the electrode; a second tank supplying the coating die with a second electrode active material slurry to be coated on the bottom layer of the electrode; a first circulation pipe connecting the coating die and the first tank; and a second circulation pipe connecting the coating die and the second tank; wherein, upon a line stop, the slurry circulates through the circulation pipes connecting the coating die and the tanks.

**In** this specification, a line stop is any situation in which the coating process is interrupted for any reason during the electrode coating process in the manufacture of a secondary battery.

**In** this specification, the left side, right side, rear side, and bottom side of the coating die (10) may be defined as the left side, right side, rear side, and bottom side as viewed from a frontal view of the lip end from which the slurry is discharged from the coating die.

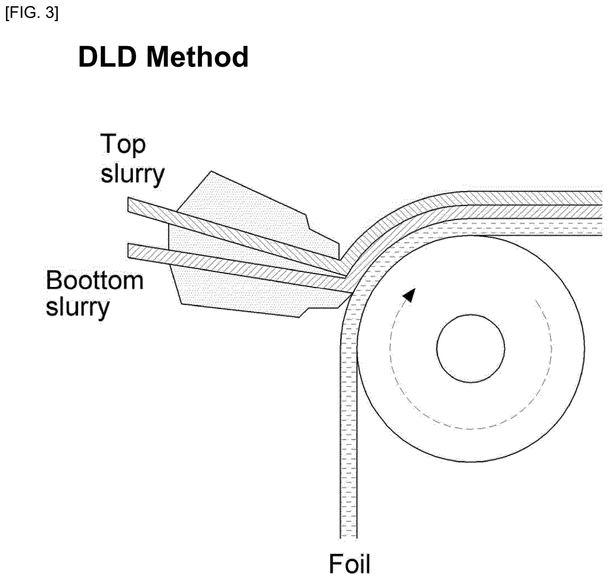

**In** one example of the present invention, the slurry circulation system for electrode coating comprises a double layer slot coating die (10) for applying an electrode active material slurry to the top layer of the electrode and the bottom layer of the electrode on a current collector. Such a double layer slot coating die is shown in FIG. 3. According to FIG. 3, the electrode coating process using a double layer slot coating die can use two types of slurry, wherein the coating die has the advantage that it is possible to strengthen the electrode while selectively imparting functions of the top or bottom layer of the electrode according to the purpose. In the electrode coating process, when an electrode active material slurry is applied to the top layer of the electrode and the bottom layer of the electrode on a current collector, a plurality of electrode active material slurries are fed to the coating die (10) and then ejected to coat the electrodes by applying them to the top layer of the electrode and the bottom layer of the electrode of the current collector.

**In** one example of the present invention, in order to enable circulation of a slurry for electrode coating even in the event of line stop, the internal slurry travel path structure of the coating die (10) may be changed, and a structure in which the circulation pipe (30) is connected to at least one of the left side, right side, rear side, and bottom side of the coating die may be formed.

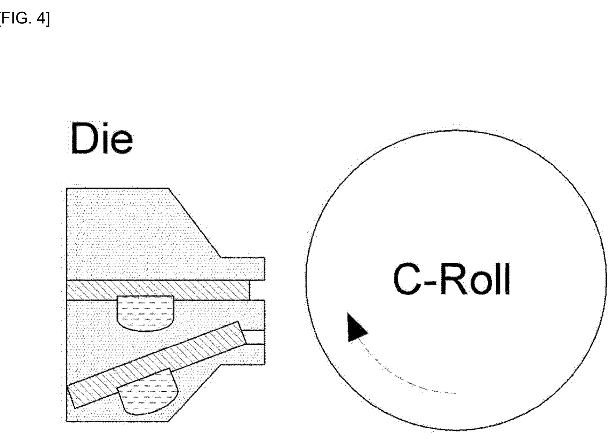

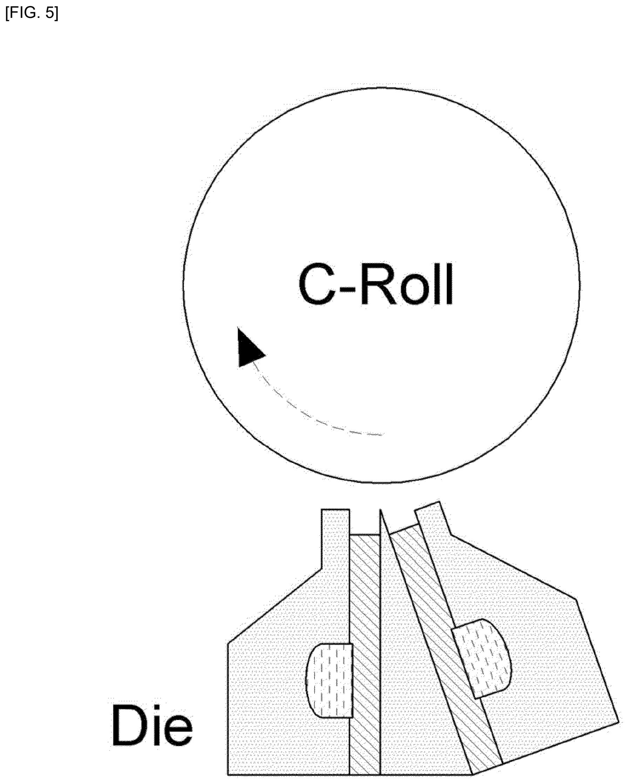

**In** one example of the present invention, the coating die (10) may include a manifold portion (11) inside the die, as shown in FIGs. 4 and 5. Especially, two manifold portions can be used for circulation of active material slurry. The coating die of the present invention includes inside the die two manifold portions that dispense slurry to the top and bottom layers of the electrode on the current collector, thereby reducing the cost of double layer coating by discharging slurry to the top and bottom layers of the electrode on the current collector without changing the coating process conditions.

**In** one example of the present invention, it can be applied not only to horizontally oriented double layer slot coating as shown in FIG. 4, but also to vertically oriented double layer slot coating as shown in FIG. 5.

**In** one example of the present invention, the coating die (10) may have a slurry feed hole (12) located on the bottom side that connects to at least one manifold portion (11) inside the die, and the manifold portion (11) may comprise a first passage comprising a void section formed in an upward direction from the slurry feed hole (12); and a second passage comprising a void section formed in lateral directions from one end of the first passage.

According to one example of the present invention, since each of the two electrode active material slurries has a separate tank and a circulation pipe, the manifold portion connected thereto is also separate for each electrode active material slurry. Two such manifolds are formed in the coating die, and from these two manifolds there are two discharge portions through which the respective slurries are discharged through the coating die.

Each manifold portion and the travel path of the slurry are shown as follows.

First, through the manifold portion (11), the slurry supplied from the slurry feed hole (12) moves in an upward direction through the first passage, and then the slurry circulates through the second passage in lateral directions from one end of the first passage, so that the process temperature in the coating die can be maintained even when the line stops, and the slurry stagnation and agglomeration in the coating die can be prevented. For example, the manifold portion (11) may have a structure with a T-shaped slurry travel path formed therein.

As used herein, a "void section" may be defined as an unoccupied space formed inside the first and second passages of the manifold portion (11) for the slurry to travel through.

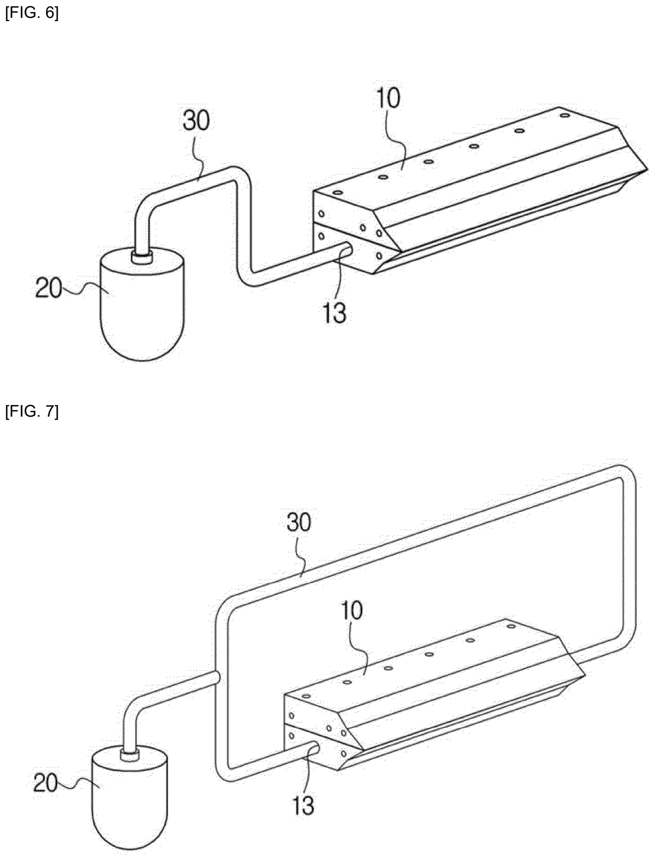

**In** one example of the present invention, FIGs. 6 to 9 illustrate a structure for the movement of either of the two electrode active material slurries, wherein at least one of the left side, right side, rear side and bottom side of the coating die may be provided with a connection hole (13) for connecting circulation pipe. The connection hole (13) is configured to allow the circulation pipe (30) leading to the tank (20) to be accessible to the coating die (10), and is not particularly limited in shape as long as it is shaped to allow access to the circulation pipe (30). The diameter of the connection hole (13) for connecting the circulation pipe is preferably the same as the diameter of the slurry feed hole (12), but is not particularly limited thereto.

**In** one example of the present invention, the slurry circulation system for electrode coating comprises: a first tank supplying the coating die with a first electrode active material slurry to be coated on the top layer of the current collector; and a second tank supplying the coating die with a second electrode active material slurry to be coated on the bottom layer of the current collector.

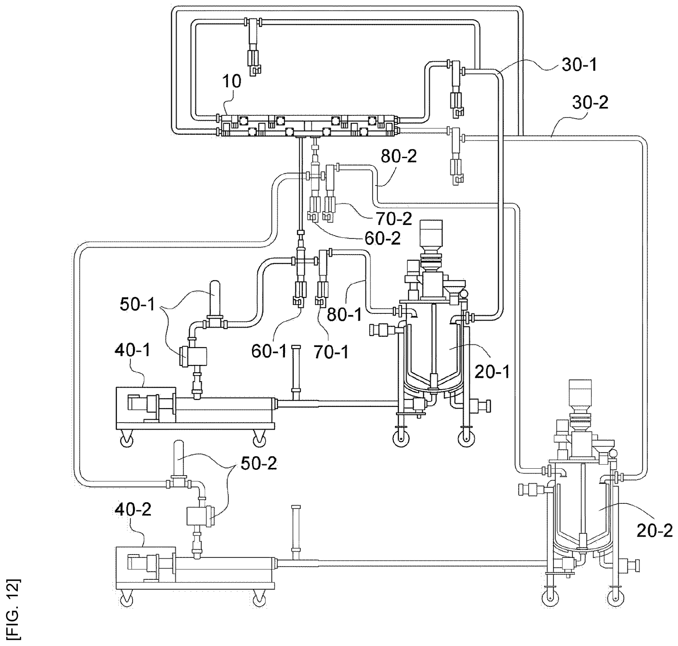

As shown in FIG. 12, in one example of the present invention, the tanks (20-1, 20-2) are not particularly limited as long as they can store and supply electrode active material slurry and store again the electrode active material slurry circulated from the coating die during line stop, and may be conventional tanks known in the art, wherein the tanks connected to the above two manifold portions may comprise two tanks for supplying two electrode active material slurries to the coating die, specifically a first tank (20-1) for supplying a first electrode active material slurry to be coated on the top layer of a current collector to the coating die, and a second tank (20-2) for supplying a second electrode active material slurry to be coated on the bottom layer of the current collector to the coating die.

**In** one example of the present invention, the slurry circulation system for electrode coating comprises: a first circulation pipe (30-1) connecting the coating die (10) and the first tank (20-1); and a second circulation pipe (30-2) connecting the coating die (10) and the second tank (20-2).

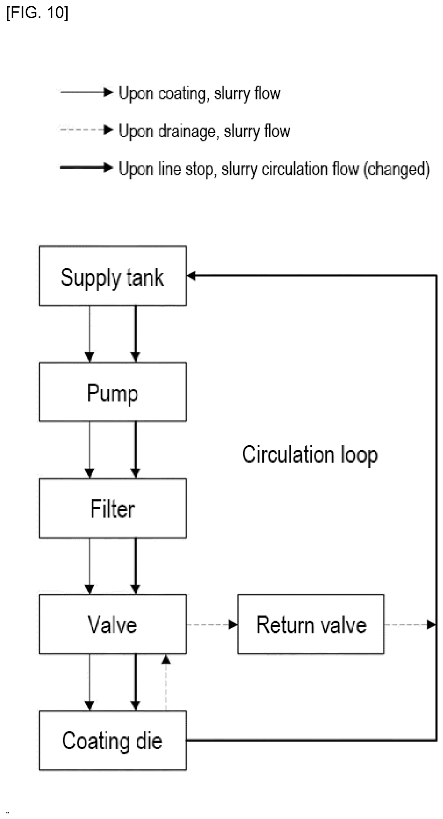

As shown in FIG. 10, the slurry circulation system for electrode coating may connect respective circulation pipes (30) from the coating die (10) to the respective tanks (20) to continuously circulate the slurry through them even when line stop. The circulation pipe (30) is configured to connect to the connection hole (13) in the coating die (10), and may be any pipe that is easily removable and attachable to the connection hole (13). It may comprise a first tank and a second tank for supplying two electrode active material slurries to the coating die, connected to two manifold portions, and thus may comprise a first circulation pipe connecting the coating die to the first tank and a second circulation pipe connecting the coating die to the second tank. Since FIG. 10 illustrates the circulation of a single slurry, only one tank, pump, filter, valve, and return valve are shown.

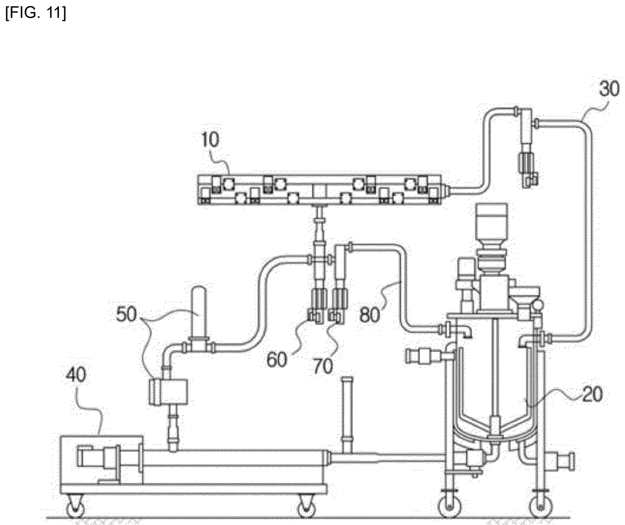

**In** one example of the present invention, the slurry circulation system for electrode coating comprises a circulation pipe (30), as shown in FIG. 11. FIG. 11 illustrates the circulation of a single slurry, so only one tank, pump, filter, valve, and return valve are shown. The circulation pipe (30) may be a flexible form of pipe. Specifically, when the line stops, the gap between the die and the C-roll is widened, which can cause a problem of pipe separation or deformation when using a fixed circulation pipe, and to prevent this, a flexible pipe that can be bent freely can be used instead of a fixed circulation pipe.

The circulation pipe (30) preferably may be one with a large diameter as long as it does not interfere with the joint part of the die, as a larger diameter is more effective for the flow of the slurry.

As shown in FIG. 12, in one example of the present invention, each of the circulation pipe of either the first circulation pipe (30-1) and the second circulation pipe (30-2) may further comprise valves (60-1, 60-2) prior to being connected to the tanks (20-1, 20-2). In one example of the present invention, the circulation pipe (30-1, 30-2) may further comprise pumps (40-1, 40-2) for transferring the slurry prior to being connected to the tanks (20-1, 20-2). The valves (60-1, 60-2) or pumps (40-1, 40-2) located on the circulation pipe are not specifically limited by the present invention and may be any conventional valves or pumps known in the art. **In** one example of the present invention, there are two tanks (first tank, second tank) and two circulation pipes (first circulation pipe, second circulation pipe), and therefore two valves and pumps may be provided accordingly.

**In** one example of the present invention, the pumps (40-1, 40-2) may be any conventional pump known in the art, without limiting the present invention, as long as they are capable of transporting the electrode active material slurry. In one example of the present invention, the filters (50-1, 50-2) may be conventional pumps known in the art, without limiting the present invention, provided that they are capable of filtering the slurry during the circulation of the electrode active material slurry. In one example of the present invention, the valves (60-1, 60-2) may be conventional pumps known in the art, without limiting the present invention, provided that they are configured to control the circulation of the electrode active material slurry by opening and closing.

**In** one example of the present invention, the slurry circulation system for electrode coating further comprises return valves (70-1, 70-2); and drain pipes (80-1, 80-2) connecting the return valves and the tanks, wherein the return valves (70-1, 70-2) can be opened upon a line stop to discharge a portion of the electrode active material slurry supplied from the tanks (20-1, 20-2) into the tanks (20-1, 20-2) via the drain pipes (80-1, 80-2). Apart from the above circulation pipes (30-1, 30-2), a portion of the electrode active material slurry can also be drained when the line stops through return valves (70-1, 70-2) and drain pipes (80-1, 80-2) located at the bottom of the coating die (10). This can prevent slurry leakage from the lip end of the coating die. In one example of the present invention, there are two tanks and two circulation pipes for each, and therefore two return valves (70-1, 70-2) and two drain pipes (80-1, 80-2) may be provided accordingly.

In one example of the present invention, the circulation RPM of the second circulation pipe may be different from the circulation RPM of the first circulation pipe. If different slurries are used, the speed of circulating the slurries should be different to adjust the viscosity or physical properties of each slurry, so it is adjusted differently from the circulation RPM of the first circulation pipe. In particular, when coating secondary batteries, the content of binder in the slurry of the bottom layer of the electrode is increased compared to the slurry of the top layer of the electrode to increase the adhesion of the coated electrode when proceeding with double layer slot coating. The difference between the circulation RPM of the first circulation pipe and that of the second circulation pipe is due to the fact that higher circulation RPM breaks the binder bond.

In one example of the present invention, the circulation RPM of the second circulation pipe can be adjusted to one-third to two-thirds of the circulation RPM of the first circulation pipe. When coating secondary batteries, since the content of binder in the slurry of the bottom layer of the electrode is increased when proceeding with double layer slot coating, the circulation **RPM** of the second circulation pipe which circulates the slurry of the bottom layer of the electrode can be adjusted to one-third to two-thirds of the circulation **RPM** of the first circulation pipe. **If** these ranges are met, the bond of the binder in the slurry will not be easily broken.

**In** one example of the present invention, the slurry circulation system for electrode coating is a system in which slurry circulates through a circulation pipe (30) of either of a first circulation pipe or a second circulation pipe connected from at least one of the left side, right side, rear side and bottom side of the coating die (10) to a tank (20) of either of the first tank and the second tank, when the line stops, as shown in FIG. 12. **In** the case of connecting the circulation pipe (30) to the top layer of the coating die (10), unlike the left side, right side, rear side, and bottom side of the coating die (10), the flow direction of the slurry is formed from a direction having a low potential energy to a direction having a high potential energy, and it is difficult to form a smooth circulation flow of the slurry relatively due to the resistance of gravity, and there is a problem that the slurry leaks from the lip end of the die.

**In** one example of the present invention, the slurry circulation system for electrode coating may circulate the slurry by connecting a circulation pipe to at least one of the left side, right side, rear side, and bottom side of the coating die (10) to minimize the interference of the joint part, depending on the position of the joint part used for fastening the top and bottom plates of the die during the manufacturing of the coating die. For example, the circulation pipe can be connected to both the left and right sides of the coating die, to the bottom side only, or to the rear side only.

**In** one example of the present invention, as shown in FIG. 12, the slurry circulation system for electrode coating is a system in which slurry circulates through a circulation pipe (30) of either of a first circulation pipe or a second circulation pipe connected from at least one of the left side and right side of the coating die (10) to a tank (20) of either of the first tank and the second tank, when the line stops. FIG. 12 illustrates the circulation of a single slurry, so only one tank, pump, filter, valve, and return valve are shown.

**In** one example of the present invention, as shown in FIGs. 6 and 7, the slurry circulation system for electrode coating is a system in which slurry circulates through a circulation pipe (30) of either of a first circulation pipe or a second circulation pipe connected from the left side or right side of the coating die (10) to a tank (20) of either of the first tank and the second tank, when the line stops. Specifically, the system may be such that, upon a line stop, the electrode active material slurry supplied through the slurry feed hole (12) moves in the direction of two different manifold portions inside the coating die via respective slurry travel paths, and circulates to respective tanks (20) via respective circulation pipes (30) connected to the connection holes (13).

**In** one example of the present invention, the two electrode active material slurries move through the two manifold portions (11) in the interior of the coating die (10) and then can be circulated to the tank (20) of either of the first tank and the second tank through the circulation pipe (30) of the first circulation pipe and the second circulation pipe connected thereto. This prevents degradation of the coating quality after line stop and allows the coating process to proceed evenly on the top and bottom plates of the current collector, despite the use of two different active slurries. The circulating pipe can be equipped with thermometers, flow meters or manometers to check the circulation.

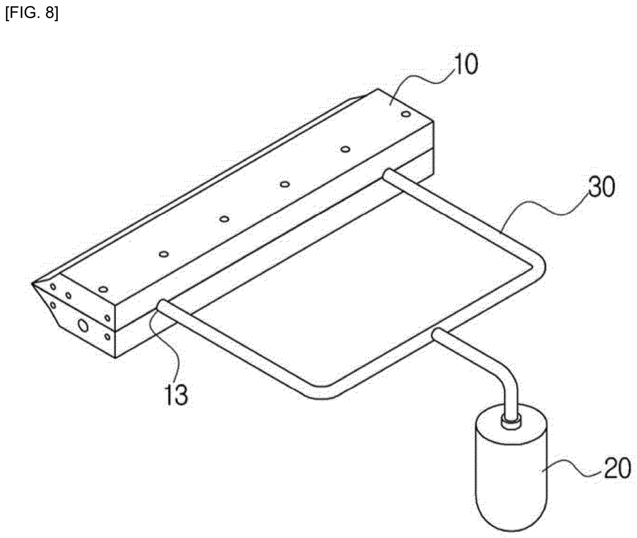

**In** one example of the present invention, as shown in FIG. 8, the slurry circulation system for electrode coating is a system in which slurry circulates through a circulation pipe (30) of either of a first circulation pipe or a second circulation pipe connected from the rear side of the coating die (10) to a tank (20) of either of the first tank and the second tank, when the line stops. **In** the case of circulating the slurry through the circulation pipe (30) connected from the rear side of the coating die (10) to the tank (20), it is advantageous to be less affected by the interference caused by the bolts connecting the top and bottom plates of the die compared to the case of connecting the circulation valve to the other side of the coating die.

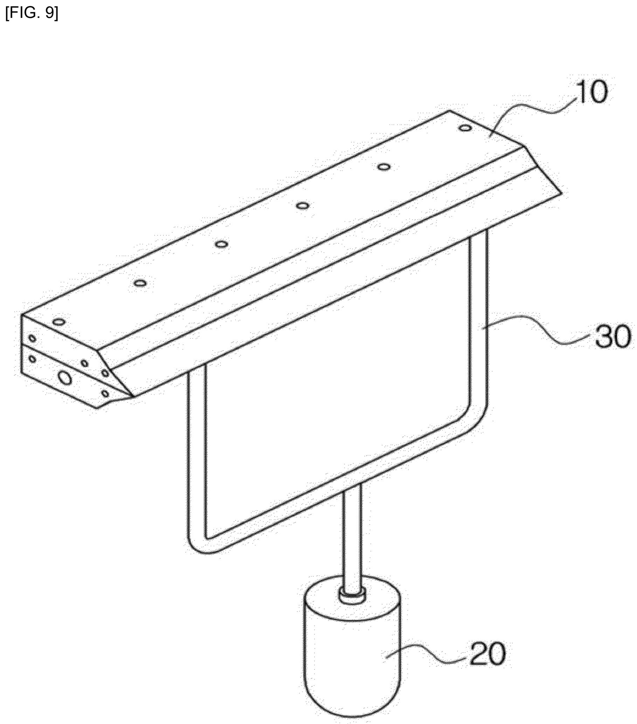

**In** one example of the present invention, as shown in FIG. 9, the slurry circulation system for electrode coating is a system in which slurry circulates through a circulation pipe (30) of either of a first circulation pipe or a second circulation pipe connected from the bottom side of the coating die (10) to a tank (20) of either of the first tank and the second tank, when the line stops.

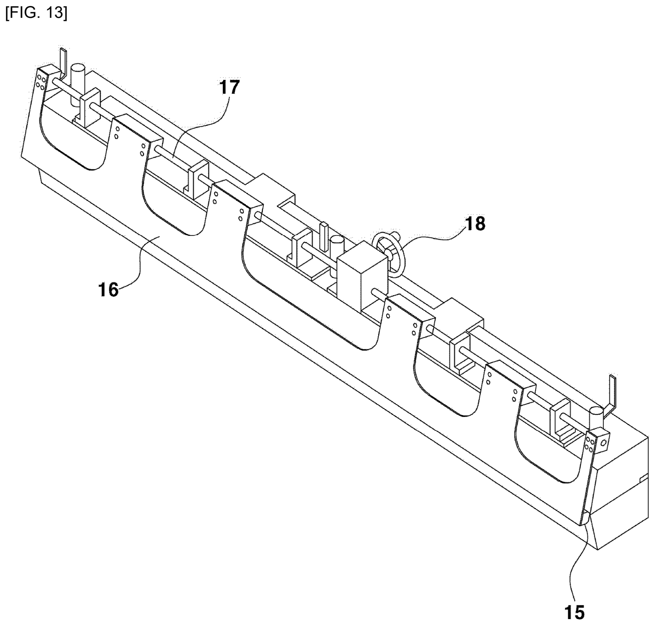

**In** one example of the present invention, as shown in FIG. 13, the coating die (10) may be provided with a discharge portion (14) from which a slurry for electrode coating is discharged, and may be provided with a lip guard (15) on the discharge portion (14) that may close or open the discharge portion (14). The lip guard (15) is positioned at one end of a lip cover (16) to close or open the discharge portion (14), and the lip cover (16) is connected to a lip cutter shaft (17) and is operable to close or open the discharge portion (14) by operation of a handle (18). The lip cover (16) or lip cutter shaft (17) may be made of any material that is not easily corroded and is rigid enough to move the lip guard (15) and sufficiently block the discharge portion without particular limitations, preferably a pad of Teflon-based material or a silicone foam pad.

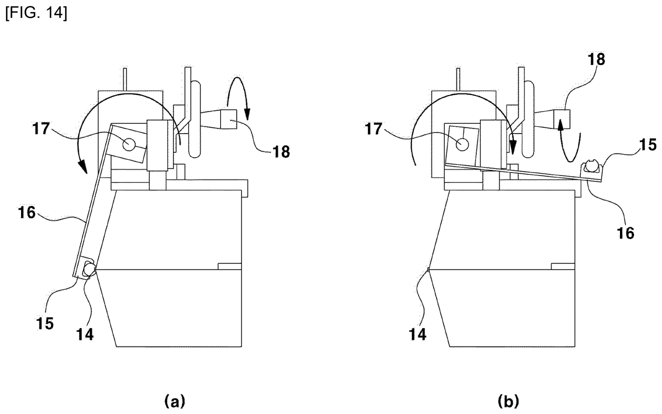

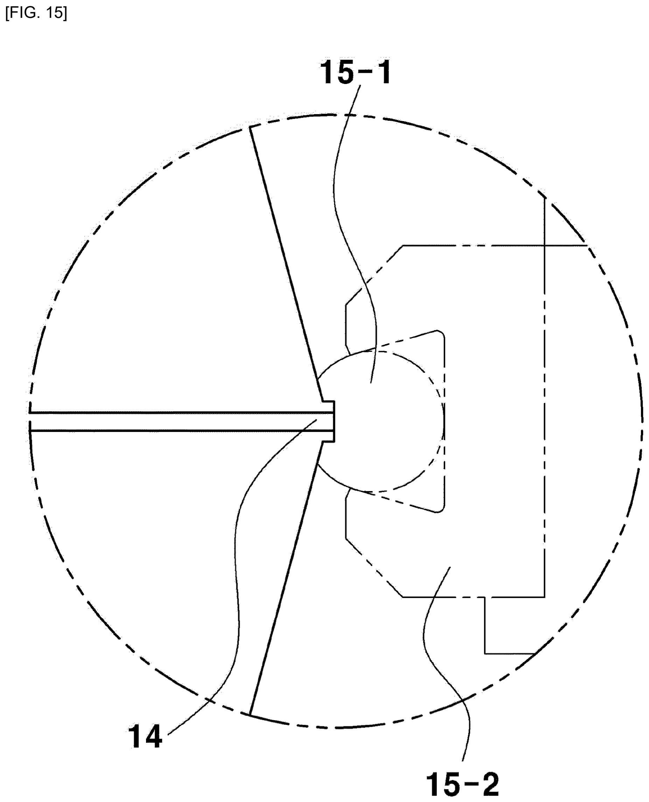

Specifically, the lip guard (15) may block the discharge portion (14) when the slurry for electrode coating is not being discharged, as shown in (a) of FIG. 14. This not only prevents leakage of the slurry for electrode coating, but also ensures that the overall circulation of the slurry for electrode coating is not interrupted. Further, the lip guard (15) should not block the discharge portion (14) when the slurry for electrode coating is discharged, as shown in (b) of FIG. 14. For this, the lip guard (15) may comprise a lip guard contact portion (15-1) that directly contacts the discharge portion (14) to prevent the discharge of the slurry for electrode coating, and a lip guard fixing portion (15-2) that secures the lip guard contact portion (15-1), as shown in FIG. 15. The lip guard contact portion (15-1) may be, but is not necessarily limited to, a resilient material to completely close the discharge portion (14). The lip guard fixing portion (15-2) is also capable of fixing the lip guard contact portion (15-1) and may be made of, for example, plastic or the like, but is not necessarily limited thereto.

Furthermore, in one example of the present invention, a protective film can be further formed over the lip guard (15) to ensure that it is not affected by solvents such as NMP. These protective films can be any films as long as they are not affected by solvents such as NMP, but for example, Teflon film or Teflon tape can be used.

**In** one example of the present invention, a method for circulating a slurry for electrode coating utilizes the slurry circulation system described above. In one example of the present invention, the method for circulating a slurry for electrode coating can circulate through a circulation pipe (30) of either of a first circulation pipe or a second circulation pipe connected from at least one of the left side, right side, rear side, and bottom side of the coating die (10) to a tank (20) of either of the first tank and the second tank in the slurry circulation system, when the line stops. Accordingly, it has the effect of keeping the internal temperature of the coating die (10) constant without the slurry stagnating in a certain area within the coating die (10) and agglomerating or gelling, thereby minimizing surface defects or line defects after line stop, thereby improving the coating quality and improving the productivity of the process.

All simple variations or modifications of the invention fall within the scope of the invention, and the specific scope of protection of the invention will be made clear by the appended claims of the patent.

## Claims

1. A slurry circulation system for electrode coating, comprising a double layer slot coating die, which applies an electrode active material slurry to the top and bottom electrode layers of the electrode on a current collector;
a first tank supplying a first electrode active material slurry to be coated on the top layer of the electrode to the coating die;
a second tank supplying a second electrode active material slurry to be coated on the bottom layer of the electrode to the coating die;
a first circulation pipe connecting the coating die and the first tank; and
a second circulation pipe connecting the coating die and the second tank,
wherein, in the event of line stop, the slurry circulates through the circulation pipes connecting the coating die and the tanks.

2. The slurry circulation system for electrode coating according to claim 1,
wherein the coating die comprises two manifold portions inside the die that dispense slurry to the top layer of the electrode and the bottom layer of the electrode on a current collector.

3. The slurry circulation system for electrode coating according to claim 1,
wherein the circulation **RPM** of the second circulation pipe is different from the circulation **RPM** of the first circulation pipe.

4. The slurry circulation system for electrode coating according to claim 1,
wherein the circulation **RPM** of the second circulation pipe is one-third to two-thirds of the circulation **RPM** of the first circulation pipe.

5. The slurry circulation system for electrode coating according to claim 1,
wherein the coating die comprises a discharge portion from which a slurry for electrode coating is discharged and a lip guard for closing and opening the discharge portion,
wherein the lip guard comprises a Teflon-based material.

6. The slurry circulation system for electrode coating according to claim 1,
wherein the slurry circulates through the circulation pipes connected from the rear side of the coating die to the tanks when the line stops.

7. The slurry circulation system for electrode coating according to claim 1,
wherein the slurry circulates through the circulation pipes connected from the left side and the right side of the coating die to the tanks when the line stops.

8. The slurry circulation system for electrode coating according to claim 1,
wherein the bottom side of the coating die is provided with slurry feed holes leading to manifold portions within the die,
wherein each of the manifold portions comprises: a first passage comprising a void section formed in an upward direction from the slurry feed hole; and a second passage comprising a void section formed in lateral directions from one end of the first passage.

9. The slurry circulation system for electrode coating according to claim 8,
wherein connection holes for connecting circulation pipes are positioned on at least one of the left side, right side, rear side and bottom side of the coating die,
wherein, when the line stops, the electrode active material slurry supplied through the slurry feed hole moves in the interior of the coating die in lateral directions through the slurry travel paths and circulates to the tanks through each of the circulation pipes connected to the connection holes.

10. The slurry circulation system for electrode coating according to claim 1,
which further comprises: a pump for supplying slurry from the respective tanks to the coating die; a filter; and a valve in communication with the slurry feed hole.

11. The slurry circulation system for electrode coating according to claim 10,
which further comprises: a return valve; and a drain pipe connecting the return valve and the respective tanks,
wherein, upon a line stop, the return valve is opened to discharge a portion of the electrode active material slurry supplied from the respective tanks into the respective tanks via the drain pipe.

12. A method for circulating a slurry for electrode coating using the slurry circulation system according to any one of claims 1 to 11.
